(19) Europäisches Patentamt / European Patent Office / Office européen des brevets

(11) **EP 1 639 059 B1**

(12) **FASCICULE DE BREVET EUROPEEN**

(45) Date de publication et mention de la délivrance du brevet:
**11.07.2018 Bulletin 2018/28**

(21) Numéro de dépôt: **04742783.6**

(22) Date de dépôt: **19.05.2004**

(51) Int Cl.:
*C01F 7/16* (2006.01)    *C01F 7/00* (2006.01)
*C01F 7/04* (2006.01)    *C01F 17/00* (2006.01)
*C09K 11/64* (2006.01)    *C09K 11/77* (2006.01)

(86) Numéro de dépôt international:
**PCT/FR2004/001240**

(87) Numéro de publication internationale:
**WO 2004/106263 (09.12.2004 Gazette 2004/50)**

(54) **COMPOSES PRECURSEURS D'ALUMINATES D'ALCALINO-TERREUX OU DE TERRE RARE ET LEUR PROCEDE DE PREPARATION**

VORLÄUFERZUSAMMENSETZUNGEN VON ERDALKALI- ODER SELTENERDALUMINATE UND VERFAHREN ZUR DEREN HERSTELLUNG

PRECURSOR COMPOUNDS OF ALKALINE EARTH METAL OR RARE EARTH METAL ALUMINATES AND METHOD FOR THEIR PRODUCTION

(84) Etats contractants désignés:
**AT BE BG CH CY CZ DE DK EE ES FI FR GB GR HU IE IT LI LU MC NL PL PT RO SE SI SK TR**

(30) Priorité: **23.05.2003 FR 0306247**

(43) Date de publication de la demande:
**29.03.2006 Bulletin 2006/13**

(73) Titulaire: **Rhodia Operations**
**75009 Paris (FR)**

(72) Inventeurs:
• **DELESPIERRE, Benjamin**
 **F-60190 ARSY (FR)**
• **FROIDEFOND, Cédric**
 **F-75013 Paris (FR)**
• **LE MERCIER, Thierry**
 **93306 Aubervilliers Cedex (FR)**

(74) Mandataire: **Senninger, Thierry et al**
**Rhodia Operations**
**Département Brevets**
**Bureau 0.121**
**40, rue de la Haie Coq**
**93306 Aubervilliers Cedex (FR)**

(56) Documents cités:
WO-A-02/094716    WO-A-03/102113
US-A1- 2001 042 853    US-B1- 6 482 387

• YUN CHAN KANG ET AL: "Preparation of YAG:europium red phosphors by spray pyrolysis using a filter-expansion aerosol generator" JOURNAL OF THE AMERICAN CERAMIC SOCIETY, AUG. 1999, AMERICAN CERAMIC SOC, USA, vol. 82, no. 8, 1999, pages 2056-2060, XP002271530 ISSN: 0002-7820
• KANG Y C ET AL: "YAG:Ce phosphor particles prepared by ultrasonic spray pyrolysis" MATERIALS RESEARCH BULLETIN, ELSEVIER SCIENCE PUBLISHING, NEW YORK, US, vol. 35, no. 5, 15 mars 2000 (2000-03-15), pages 789-798, XP004215133 ISSN: 0025-5408

**Description**

La présente invention concerne des composés précurseurs d'aluminates d'alcalino-terreux ou de terre rare et leur procédé de préparation. De nombreux produits manufacturés incorporent dans leur fabrication des luminophores. Ces luminophores peuvent émettre une lumière dont la couleur et l'intensité sont fonction de l'excitation qu'ils subissent. Ils sont aussi largement utilisés dans différents types d'écrans couleur et dans les lampes.

Ces produits sont obtenus généralement à partir d'un mélange de sels ou d'oxydes des différents constituants par chauffage à haute température en présence d'un agent fondant (flux). Pour obtenir des luminophores efficaces, ce mode de préparation nécessite généralement des températures élevées, notamment supérieures à 1400°C, de l'ordre de 1600°C par exemple, et conduit à des produits de taille importante avec une répartition granulométrique souvent très étendue. Des opérations supplémentaires de broyage ou de désagglomération sont alors nécessaires pour obtenir un produit de taille plus faible.

Il existe aussi des voies par pyrolyse d'aérosol qui conduisent à des luminophores avec des températures de calcination par exemple comprises entre 1400°C et 1500°C. Ces voies permettent d'obtenir des produits à des températures plus faibles mais elles donnent directement des luminophores de caractéristiques bien fixées. Or, il serait intéressant de pouvoir disposer d'un produit précurseur ou de départ qui permette d'obtenir des produits finaux et/ou des luminophores à une température relativement faible d'une part et, d'autre part, qui offre la possibilité de conduire, par une simple étape de traitement thermique, sans ajout de matières premières autres que l'agent fondant, à des produits ou luminophores de caractéristiques variables et contrôlées, en morphologie par exemple, en fonction des conditions de transformation, notamment en présence ou non d'un flux.

L'objet de l'invention est la mise au point d'un tel produit précurseur.

**Etat de la technique**

WO 02/094716 (D1) décrit des particules à base de lanthane.

US 2001/0042853 (D2) décrit des luminophores obtenus par une technique qui s'appuie sur un mélange sous forme de gouttelettes ([0082]) qui est transformé par calcination en particules du luminophore. D2 ne décrit pas que la composition des gouttelettes puisse correspondre à une composition selon la formule (1) ou (2). De plus, les particules de luminophore sont très denses et pas poreuses et il n'est pas décrit explicitement dans la description que ces pores présentent un diamètre moyen compris entre 10 et 200 nm.

US 6,482,387 (D3) décrit des particules par exemple des particules $Y_3Al_5O_{12}$. Il n'est nulle part fait mention d'une porosité avec un diamètre de pores entre 10 et 200 nm.

J. Am. Ceram. Soc. 1999, 82(8), 2056-2060 (D4) et Mat. Res. Bull. 2000, 35, 789-798 (D5) décrivent des composés à base d'yttrium, non couverts par la revendication 1.

Dans ce but, le composé précurseur d'aluminate d'alcalino-terreux ou de terre rare de l'invention est tel que décrit à la revendication 1.

L'invention concerne aussi un procédé de préparation d'un tel précurseur d'aluminate lequel est tel que décrit à la revendication 19.

Le composé précurseur de l'invention peut permettre d'obtenir, en fonction de sa composition, un produit cristallisé, notamment un luminophore après calcination dès 1200°C.

D'autres caractéristiques, détails et avantages de l'invention apparaîtront encore plus complètement à la lecture de la description qui va suivre faite en référence aux dessins annexés dans lesquels :

- la figure 1 est un diagramme RX d'un composé précurseur selon l'invention;
- la figure 2 est un diagramme RX d'un aluminate obtenu par calcination d'un composé précurseur selon l'invention;
- la figure 3 est une photo de microscopie électronique à balayage (MEB) d'un composé précurseur de l'invention;
- la figure 4 est une photo de microscopie électronique à balayage (MEB) d'un aluminate selon l'invention.

Pour la suite de la description on entend par terre rare les éléments du groupe constitué par l'yttrium et les éléments de la classification périodique de numéro atomique compris inclusivement entre 57 et 71. On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)". On entend par luminophore tout produit pouvant émettre de la lumière après avoir reçu une excitation. On précise pour la suite de la description que, sauf indication contraire, dans les fourchettes de valeurs qui sont données, les valeurs aux bornes sont incluses.

Le composé précurseur de l'invention présente une composition qui est donnée par les formules (1) et (2) ci-dessus.

Les composés précurseurs de formule (1) peuvent en outre, d'une manière connue, contenir des éléments additionnels, appelés « substituants » car ces éléments sont considérés comme venant en substitution partielle des éléments constitutifs $M^1$, Mg et Al. Ces substitutions permettent notamment de modifier les propriétés optiques des produits issus des composés de l'invention.

On va donner ci-dessous des exemples de ces substituants pour chaque élément constitutif sur la base de ce qui est communément admis actuellement dans l'état de la technique. Ceci implique que l'on ne sortirait pas de la présente invention si un substituant décrit pour un élément constitutif donné s'avérait être en fait par la suite en substitution d'un autre élément constitutif que celui présumé dans la présente description.

Ainsi, l'alcalino-terreux peut être partiellement substitué par au moins une terre rare qui peut être notamment l'europium, le néodyme et le dysprosium, ces éléments pouvant être pris seul ou en combinaison. De même, le magnésium peut être partiellement substitué par au moins un élément choisi parmi le zinc, le manganèse ou le cobalt. Enfin, l'aluminium peut aussi être partiellement substitué par au moins un élément choisi parmi le gallium, scandium, le bore, le germanium ou le silicium.

Les quantités de ces substituants peuvent varier, d'une manière connue, dans de larges gammes, toutefois elles doivent être telles, pour les valeurs maximales, que soit conservée la structure cristallographique d'alumine de transition du composé précurseur, structure qui constitue une autre caractéristique de ce précurseur et qui sera décrite ci-dessous. Par ailleurs, la quantité minimale de substituant est celle en deçà de laquelle le substituant ne produit plus d'effet.

Généralement toutefois, la quantité de substituant de $M^1$ et du magnésium est d'au plus 30%, plus particulièrement d'au plus 20% et encore plus particulièrement d'au plus 10%, cette quantité étant exprimée en % atomique (rapport atomique substituant/(substituant + $M^1$ ou Mg). Pour l'aluminium, cette quantité, exprimée de la même manière, est généralement d'au plus 15%. La quantité minimale de substituant peut être d'au moins 0,1% par exemple.

Comme composés précurseurs d'aluminates selon la formule (1), on peut citer plus particulièrement ceux pour lesquels a = 1, b = 0 et c = 1, 6 ou 7 et notamment les produits de formule $Sr_{0,99}Eu_{0,01}Al_2O_4$; $Sr_{0,98}Eu_{0,01}Dy_{0,01}Al_2O_4$; $Ba_{0,98}Eu_{0,02}Al_2O_4$; $Ca_{0,99}Eu_{0,01}Al_2O_4$; $Ca_{0,98}Eu_{0,01}Nd_{0,01}Al_2O_4$; $Ba_{0,98}Eu_{0,02}Al_{12}O_{19}$; $Ba_{0,98}Mn_{0,02}Al_{12}O_{19}$; $Sr_{3,9}Eu_{0,1}Al_{14}O_{25}$ et $Sr_{3,98}Eu_{0,01}Dy_{0,01}Al_{14}O_{25}$.

On peut aussi mentionner tout particulièrement les précurseurs d'aluminates de magnésium c'est à dire ceux de formule (1) pour lesquels b n'est pas nul et notamment ceux pour lesquels a = b = 1 et c = 5 ou 7 et encore plus particulièrement ceux dans lesquels l'alcalino-terreux est le baryum, c'est à dire les précurseurs d'aluminates de baryum et de magnésium. On peut aussi mentionner les produits de formule (3)

$$a(Ba_{1-d}Eu_d).b(MgO).c(Al_2O_3) \qquad (3)$$

dans laquelle a, b et c sont comme définis plus haut et vérifient les relations :

$$0,25 \le a \le 2; \ 0 \le b \le 2 \ \text{et} \ 3 \le c \le 9 \ \text{et} \ 0,01 \le d \le 0,3.$$

On peut ainsi citer comme exemples de ce type de produits ceux de formule $Ba_{0,9}Eu_{0,1}MgAl_{10}O_{17}$; $Ba_{0,9}Eu_{0,1}Mg_{0,8}Mn_{0,2}Al_{10}O_{17}$; $BaMgAl_{14}O_{23}$. On peut aussi mentionner les produits de formule (1) dans laquelle a = 1, b = 2 et c = 8, notamment $Ba_{0,8}Eu_{0,2}Mg_{,1,93}Mn_{0,07}Al_{16}O_{27}$.

Pour les précurseurs d'aluminates de formule (2) il s'agit de produit à base de terre rare dans lesquels le cérium et le terbium peuvent aussi être substitués par au moins une autre terre rare. Ce qui a été dit plus haut pour les substituants s'applique aussi ici, notamment en ce qui concerne les quantités.

Le composé précurseur de l'invention est cristallisé sous forme essentiellement d'une alumine de transition qui peut être par exemple de type gamma. Cette cristallisation est mise en évidence par analyse RX. Par « essentiellement » on entend que le diagramme RX peut présenter, outre la phase majoritaire d'alumine de transition, une ou plusieurs phases minoritaires correspondant à des impuretés. Selon un mode de réalisation préféré de l'invention, le diagramme RX ne fait apparaître que la seule phase d'alumine de transition.

Le composé précurseur de l'invention possède une morphologie spécifique car il se présente sous forme de particules substantiellement sphériques. Cette morphologie peut être mise en évidence par microscopie électronique à balayage (MEB).

Ces particules sont bien séparées et individualisées. Il n'y a pas ou peu d'agglomérats de particules.

Ces particules peuvent aussi présenter une taille qui varie dans de larges proportions. Le diamètre moyen de particules ($d_{50}$) ,tel que défini ci-dessous, est compris entre 1,5$\mu$m et 20$\mu$m. Ce diamètre moyen peut être plus particulièrement compris entre 2$\mu$m et 10$\mu$m et encore plus particulièrement entre 2$\mu$m et 5$\mu$m.

La répartition granulométrique des particules du composé précurseur de l'invention peut aussi être resserrée. Ainsi, l'indice de dispersion $\sigma/m$ est d'au plus 0.8. Il peut être plus particulièrement d'au plus 0.6.

On entend par indice de dispersion le rapport :

$$\sigma/m = (d_{84}-d_{16})/2d_{50}$$

dans lequel :

- $d_{84}$ est le diamètre des particules pour lequel 84% du volume de la population desdites particules est constitué de particules ayant un diamètre inférieur à cette valeur;
- $d_{16}$ est le diamètre des particules pour lequel 16% du volume de la population desdites particules est constitué de particules ayant un diamètre inférieur à cette valeur;
- $d_{50}$ est le diamètre des particules pour lequel 50% du volume de la population desdites particules est constitué de particules ayant un diamètre inférieur à cette valeur Pour l'ensemble de la description, la taille moyenne et l'indice de dispersion sont les valeurs obtenues en mettant en oeuvre la technique de diffraction laser et en utilisant un granulomètre du type COULTER.

Les particules de l'aluminate de l'invention sont en outre chimiquement homogènes. On entend par-là qu'au moins les éléments constitutifs ne sont pas présents dans le composé sous forme d'un simple mélange physique, par exemple un mélange d'oxydes, mais au contraire qu'il y a des liaisons de type chimique entre ces éléments.

Par ailleurs, cette homogénéité chimique peut être quantifiée en déterminant la taille des domaines d'hétérogénéité. Ceux-ci sont inférieurs à 60 nm$^2$. Cela signifie qu'il n'y a pas de différence dans la composition chimique des particules du précurseur de l'invention entre des zones de surface de 60 nm$^2$. Cette caractéristique d'homogénéité est déterminée par analyse MET-EDS. Plus précisément, le domaine d'hétérogénéité est mesuré par la méthode de spectroscopie à dispersion d'énergie (EDS) en utilisant une nanosonde de microscopie électronique à transmission (MET).

Comme on l'a vu plus haut, les particules du composé précurseur de l'invention sont sphériques. Ces sphères sont généralement pleines. Cette caractéristique peut être mise en évidence par microtomie par microscopie électronique par transmission (MET). Toutefois, ces particules présentent une porosité spécifique. En effet, cette porosité est apportée par des pores dont le diamètre moyen est d'au moins 10 nm. Ce diamètre est compris entre 10 nm et 200 nm, et encore plus particulièrement entre 10 nm et 100 nm. Cette porosité est mesurée par les techniques connues à l'azote et au mercure.

Le composé précurseur de l'invention peut présenter un certain nombre de caractéristiques additionnelles. Ainsi, une autre caractéristique du composé précurseur de l'invention est sa pureté en azote. La teneur en azote de ce composé peut être d'au plus 1%, teneur exprimée en masse d'azote par rapport à la masse totale du composé. Cette teneur peut être plus particulièrement d'au plus 0,6%. La teneur en azote est mesurée par fusion d'un échantillon dans un four à effet Joule et mesure de la conductibilité thermique. Selon d'autres modes de réalisation, le composé précurseur de l'invention peut aussi présenter une pureté élevée en d'autres éléments. Ainsi, il peut avoir une teneur en carbone d'au plus 0,5%, plus particulièrement d'au plus 0,2%. Il peut aussi présenter, selon un autre mode de réalisation, une teneur en chlore d'au plus 10%, plus particulièrement d'au plus 5%. Enfin, il peut avoir encore une teneur en soufre d'au plus 0,05%, plus particulièrement d'au plus 0,01% selon un autre mode de réalisation. La teneur en carbone et celle en soufre sont mesurées par combustion d'un échantillon dans un four à effet Joule et détection par un système infrarouge. La teneur en chlore est mesurée par la technique de fluorescence X. Pour les valeurs données ci-dessus, les teneurs sont toutes exprimées en % massique de l'élément concerné par rapport à la masse totale du composé.

Bien entendu, le composé précurseur de l'invention, outre la teneur en azote donnée plus haut, peut présenter simultanément les teneurs en carbone, chlore et soufre qui ont été mentionnées ci-dessus.

Le composé précurseur présente généralement une surface spécifique BET d'au moins 75 m$^2$/g, qui peut être comprise par exemple entre 75 m$^2$/g et 200 m$^2$/g.

Le composé précurseur de l'invention peut en outre être caractérisé par son comportement à la calcination. Ainsi, sa structure cristallographique évolue à la suite d'une calcination. D'une manière générale, sa structure d'alumine de transition se transforme en une autre structure à une température relativement basse, cette structure et cette température dépendant de la composition du précurseur de l'invention. Ainsi, pour les composés de formule (1) ou (2) et dans le cas où b = 0, la structure de l'aluminate obtenu après calcination est du type tridimite. Pour les composés de formule (2) avec b = 1 ou b = 0, la structure de l'aluminate issu de la calcination est du type magnétoplombite ou grenat respectivement.

Dans le cas particulier des précurseurs d'aluminates de magnésium de formule (1) où l'alcalino-terreux est le baryum et pour lesquels a = b = 1 et c = 5 ou 7 ou pour lesquels a = 1, b = 2 et c = 8 ainsi que les précurseurs de formule (3) dans laquelle b > 0 , par exemple les produits de formule $Ba_{0,9}Eu_{0,1}MgAl_{10}O_{17}$; $Ba_{0,9}Eu_{0,1}Mg_{0,8}Mn_{0,2}Al_{10}O_{17}$ et $BaMgAl_{14}O_{23}$, les produits issus de la calcination ont une structure alumine bêta ou dérivée de celle-ci et cette structure est obtenue à une température qui est de 1200°C ou environ.

Les aluminates issus des composés précurseurs de l'invention se présentent sous forme d'une phase cristallographique pure. Par « pure » on entend que l'analyse RX ne permet de déceler qu'une phase unique et ne permet pas de déceler la présence d'autres phases que la phase tridimite, magnétoplombite, grenat ou alumine bêta par exemple.

Comme propriété intéressante du précurseur de l'invention, on observe aussi que, lors de la calcination, le composé de l'invention conserve sa morphologie sous forme de sphère. Il n'y pas de frittage des particules sphériques entre elles. L'indice de dispersion des particules est aussi conservé. Enfin, la taille des particules ne varie que faiblement. Le d50 peut par exemple n'augmenter au maximum que de 2 $\mu$m ou 1 $\mu$m. Sans vouloir être lié par une théorie, on peut penser que cette propriété est la conséquence de l'existence d'une certaine porosité à l'intérieur des particules, porosité provenant de la présence mentionnée plus haut des pores de diamètre moyen d'au moins 10 nm. L'absence de frittage des particules peut se voir par la photo par microscopie mais surtout elle est confirmée par le fait que l'on ne voit pas apparaître une macroporosité sur le produit issu de la calcination. En effet, dans le cas des produits de l'art antérieur, la porosimétrie met en évidence une porosité provenant de pores de diamètre moyen de l'ordre de 50000 nm ou de diamètre compris entre 25000 et 90000 nm, qui correspondent en fait aux espaces entre les particules agglomérées.

L'invention concerne aussi des aluminates d'alcalino-terreux ou de terre rare, notamment de baryum et de magnésium, qui peuvent présenter le cas échéant des propriétés de luminescence. Ces aluminates s'obtiennent par calcination du composé de l'invention, à une température suffisante pour obtenir la phase d'alumine bêta, par exemple d'au moins 1200°C dans le cas des aluminates de baryum et de magnésium et sous atmosphère réductrice lorsque l'on cherche à obtenir un produit luminophore et que les substituants doivent être sous forme réduite. L'aluminate obtenu à l'issue de cette calcination peut, en fonction des conditions de calcination, présenter les mêmes caractéristiques morphologiques que celles décrites plus haut pour le composé précurseur (particules sphériques, taille des particules, indice de dispersion), la même composition et la même pureté en élement azote, carbone, chlore et soufre. Les valeurs données plus haut et relatives à la morphologie, la composition et la pureté et concernant le composé précurseur s'appliquent donc aussi ici à l'aluminate. Cet aluminate est sous forme d'une phase d'alumine bêta pure. Dans le cas des produits contenant de l'europium, celui-ci peut être présent sous forme $Eu^{2+}$. Dans ce cas et sous une excitation inférieure à 380nm environ d'onde, l'aluminate peut émettre dans le bleu (450nm).

Le procédé de préparation du composé précurseur de l'invention va maintenant être décrit. Comme indiqué plus haut, ce procédé comporte une première étape dans laquelle on forme un mélange liquide qui est une solution ou une suspension ou encore un gel, des composés de l'aluminium et des autres éléments rentrant dans la composition du composé précurseur.

Comme composés de ces éléments, on utilise habituellement des sels inorganiques ou encore les hydroxydes. Comme sels on peut mentionner les nitrates de préférence, notamment pour le baryum, l'aluminium, l'europium et le magnésium. Les sulfates, notamment pour l'aluminium, les chlorures ou encore les sels organiques, par exemple les acétates, peuvent éventuellement être employés. On peut utiliser aussi comme composé de l'aluminium un sol ou dispersion colloïdale d'aluminium. Une telle dispersion colloïdale d'aluminium peut présenter des particules ou colloïdes dont la taille est comprise entre 1nm et 300nm. L'aluminium peut être présent dans le sol sous forme de boehmite.

L'étape suivante consiste à sécher le mélange préalablement préparé. Ce séchage se fait par atomisation. On entend par séchage par atomisation un séchage par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

On notera que l'on peut également mettre en oeuvre l'opération d'atomisation-séchage au moyen d'un réacteur "flash", par exemple du type décrit dans les demandes de brevet français n° 2 257 326, 2 419 754 et 2 431 321. Ce type d'atomiseur peut être utilisé notamment pour préparer des produits dont la taille des particules est faible. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

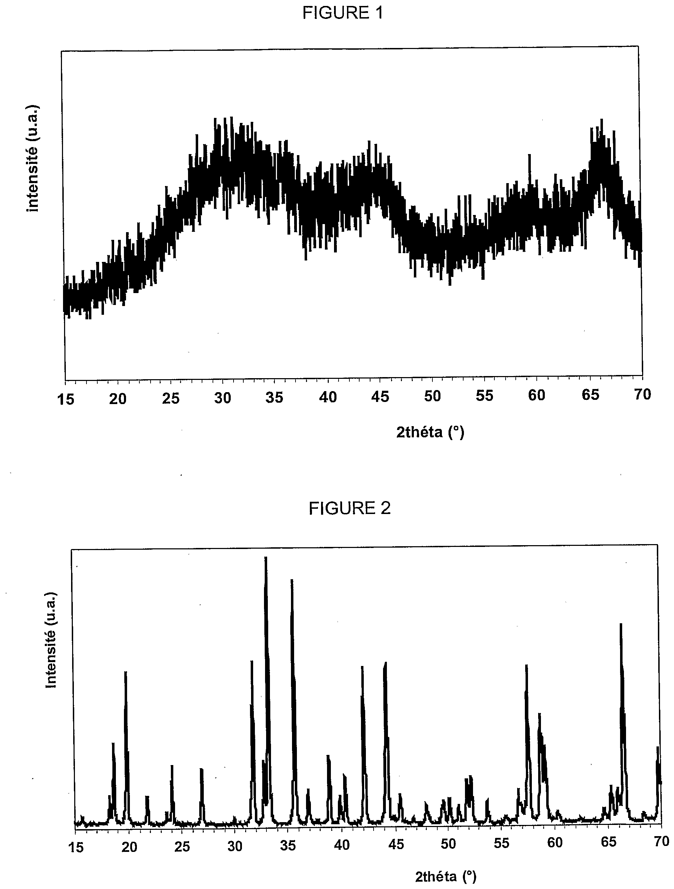

En ce qui concerne le réacteur flash mentionné plus haut, on pourra notamment se référer à la figure 1 de la demande de brevet français 2 431 321. Celui-ci est constitué d'une chambre de combustion et d'une chambre de contact composée d'un bicône ou d'un cône tronqué dont la partie supérieure diverge. La chambre de combustion débouche dans la chambre de contact par un passage réduit. La partie supérieure de la chambre de combustion est munie d'une ouverture permettant l'introduction de la phase combustible. D'autre part la chambre de combustion comprend un cylindre interne coaxial, définissant ainsi à l'intérieur de celle-ci une zone centrale et une zone périphérique annulaire, présentant des perforations se situant pour la plupart vers la partie supérieure de l'appareil. La chambre comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial. Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques. Enfin, un tuyau coudé débouche dans le passage réduit, dont l'extrémité s'ouvre dans l'axe de la zone centrale.

La phase gazeuse animée d'un mouvement hélicoïdal (par la suite appelée phase hélicoïdale) est composée d'un gaz, généralement de l'air, introduit dans un orifice pratiqué dans la zone annulaire, de préférence cet orifice est situé dans la partie inférieure de ladite zone. Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact. La vitesse de cette phase hélicoïdale est généralement comprise entre 10 et 100 m/s et de préférence entre 30 et 60 m/s. Par ailleurs, une phase combustible qui peut être notamment du méthane, est injectée axialement par l'ouverture précitée dans la zone centrale à une vitesse d'environ 100 à 150 m/s. La phase combustible est enflammée par tout moyen connu, dans la région où le combustible et la phase hélicoïdale sont en contact. Par la suite, le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite le mélange à traiter sous forme de liquide par le tuyau précité. Le liquide est alors fractionné en une multitude de gouttes, chacune d'elle étant transportée par un volume de gaz et soumise à un mouvement créant un effet centrifuge. Habituellement, le débit du liquide est compris entre 0,03 et 10 m/s.

Le rapport entre la quantité de mouvement propre de la phase hélicoïdale et celle du mélange liquide doit être élevé. En particulier il est d'au moins 100 et de préférence compris entre 1000 et 10000. Les quantités de mouvement au niveau du passage réduit sont calculées en fonction des débits d'entrée du gaz et du mélange à traiter, ainsi que de la section dudit passage. Une augmentation des débits entraîne un grossissement de la taille des gouttes.

Dans ces conditions, le mouvement propre des gaz est imposé dans sa direction et son intensité aux gouttes du mélange à traiter, séparées les unes des autres dans la zone de convergence des deux courants. La vitesse du mélange liquide est de plus réduite au minimum nécessaire pour obtenir un flot continu.

L'atomisation se fait avec une température de sortie du solide comprise entre 100°C et 300°C.

La dernière étape du procédé consiste à calciner le produit obtenu à l'issue du séchage. La calcination se fait à une température comprise entre 700°C et 950°C, plus particulièrement entre 700°C et 900°C. Une température inférieure à 700°C ne permettrait pas d'obtenir le composé de l'invention sous une forme cristallisée essentiellement d'alumine de transition. Au-delà de 950°C, il y a un risque de faire apparaître des phases parasites qui pourraient subsister dans l'aluminate obtenu à partir du précurseur. La durée de la calcination est choisie aussi suffisamment longue pour obtenir le produit sous la forme cristallisée essentiellement d'alumine de transition et avec les teneurs en azote et des autres éléments (C, S et Cl) données plus haut. Elle peut être ainsi comprise, par exemple, entre 10 minutes et 5 heures et elle est d'autant plus faible que la température de calcination est élevée. La calcination se fait généralement sous air.

Le composé précurseur de l'invention est obtenu à l'issue de cette calcination.

Comme on l'a décrit plus haut, on peut obtenir un aluminate à partir de ce composé par calcination de celui-ci. Cette calcination doit se faire à une température suffisante pour que le produit qui en est issu se présente dans une structure recherchée notamment. Dans le cas des aluminates de baryum et de magnésium cette température est d'au moins 1200°C. Cette calcination peut se faire sous air ou, de préférence lorsque l'on cherche à obtenir un produit luminophore, sous atmosphère réductrice par exemple sous hydrogène en mélange dans l'azote. Dans le cas de l'europium comme substituant, celui-ci passe ainsi à l'état d'oxydation 2. La durée de cette calcination est par exemple de 2 heures environ.

Cette calcination peut se faire avec ou sans flux. A titre de flux convenables, on peut notamment citer le fluorure de lithium, d'aluminium, de magnésium, le chlorure de lithium, d'aluminium, de magnésium, le chlorure de potassium, le chlorure d'ammonium, l'oxyde de bore, cette liste n'étant bien entendu nullement limitative. Le flux est mélangé au produit puis le mélange est porté à la température choisie.

On peut obtenir un aluminate de même morphologie que le composé précurseur de l'invention en calcinant sans flux ou bien un produit sous forme de plaquettes en calcinant avec un flux dans le cas des produits à structure d'alumine bêta.

Les aluminates ainsi obtenus peuvent être utilisés comme luminophore. Ils peuvent ainsi entrer dans la fabrication de tout appareil incorporant des luminophores comme des écrans à plasma, des lampes trichromatiques et des diodes électroluminescentes.

A titre d'exemple parmi les produits mentionnés plus haut, on peut utiliser dans les lampes ceux de formule $Ba_{0,9}Eu_{0,1}MgAl_{10}O_{17}$; $Ba_{0,9}Eu_{0,1}Mg_{0,8}Mn_{0,2}Al_{10}O_{17}$; $Ba_{0,8}Eu_{0,2}Mg_{,1,93}Mn_{0,07}Al_{16}O_{27}$; $Ce_{0,67}Tb_{0,33}MgAl_{11}O_{19}$ et $Sr_{3,9}Eu_{0,1}Al_{14}O_{25}$. Pour les écrans à plasma conviennent notamment $Ba_{0,9}Eu_{0,1}MgAl_{10}O_{17}$; $Sr_{0,99}Eu_{0,01}Al_2O_4$; $Ca_{0,99}Eu_{0,01}Al_2O_4$; $Ba_{0,98}Mn_{0,02}Al_{12}O_{19}$. Les produits de formule $Sr_{0,98}Eu_{0,01}Dy_{0,01}Al_2O_4$; $Ca_{0,98}Eu_{0,01}Nd_{0,01}Al_2O_4$ et

$Sr_{3,98}Eu_{0,01}Dy_{0,01}Al_{14}O_{25}$ peuvent être utilisés pour leurs propriétés de phosphorescence. Pour les diodes électroluminescentes convient aussi le produit $Ba_{0,9}Eu_{0,1}MgAl_{10}O_{17}$.

Les écrans à plasma ou à micro pointes, les diodes électroluminescentes et les lampes trichromatiques peuvent comprendre ces aluminates à titre de luminophore.

La mise en oeuvre de ce luminophore dans la fabrication des dispositifs décrits ci-dessus se fait selon des techniques bien connues, par exemple par sérigraphie, électrophorèse ou sédimentation.

Un exemple va maintenant être donné.Pour cet exemple, on a employé les méthodes de mesure qui suivent.

Analyse de la teneur en carbone et en soufre

Un analyseur LECO CS 444 a été utilisé pour déterminer simultanément la teneur en carbone total et en soufre global par une technique mettant en oeuvre une combustion dans un four à induction sous oxygène et une détection par un système infrarouge.

L'échantillon (standard ou inconnu) est introduit dans un creuset céramique dans lequel on ajoute un accélérateur type LECOCEL et un fondant type IRON (lors de l'analyse des échantillons inconnus). L'échantillon est fondu à haute température dans le four, les gaz de combustion sont filtrés sur une grille métallique et traversent ensuite sur une série de réactifs. A la sortie du piège à humidité, on détecte le $SO_2$ à l'aide d'une première cellule infrarouge. Ensuite les gaz traversent un catalyseur (gel de silice platinisée) qui transforme le CO en $CO_2$ et le $SO_2$ en $SO_3$. Ce dernier est piégé par la cellulose et à l'aide de deux cellules infrarouge, on détecte le $CO_2$.

Analyse de la teneur en azote

Un analyseur LECO TC-436 a été utilisé pour déterminer la teneur en azote par une technique mettant en oeuvre une fusion dans un four à effet Joule. La teneur en azote est mesurée par conductibilité thermique.

L'analyse s'effectue en deux phases :

- dégazage du creuset vide. On place un creuset graphite vide entre les deux électrodes du four. Un balayage d'hélium isole et purge le creuset des gaz de l'atmosphère. On applique un fort courant électrique au travers du creuset ayant pour effet de porter ce dernier à de très hautes températures.
- analyse de l'échantillon. L'échantillon pesé, introduit dans la tête de chargement, tombe dans le creuset vide dégazé. Une nouvelle application d'un fort courant électrique au travers du creuset conduit cette fois à la fusion de l'échantillon. L'azote est alors détecté par une cellule à conductibilité thermique.

Mesure granulométrique par diffraction laser

Les mesures sont effectuées sur l'appareil à diffraction de la lumière COULTER LS 230 (module standard) associé à une sonde à ultrason de 450 W (puissance 7). Les échantillons sont préparés de la manière suivante : on disperse 0,3 g de chaque échantillon dans 50ml d'eau épurée. La suspension ainsi préparée est soumise aux ultrasons pendant 3 min. Une partie aliquote de la suspension telle quelle et désagglomérée est introduite dans la cuve de façon à obtenir une obscuration correcte. Pour les mesures, le modèle optique utilisé est : n = 1,7 et k = 0,01.

Mesure de la porosité

Deux techniques sont utilisées de manière à pouvoir mesurer les domaines de pores allant de 2 nm à plusieurs centaines de microns. Il s'agit d'abord d'une mesure de porosité au mercure utilisant comme appareil un porosimètre Autopore 9420 de Micromeritics configuré avec un angle de contact Hg = 140°. Avant la mesure de porosité, la poudre est dégazée 2h à 200°C dans une étuve. On utilise aussi une technique à l'azote utilisant comme appareil un porosimètre Tristar 3000 de Micromeritics et un banc de dégazage VAC PREP de Micromeritics. Avant la mesure de porosité, la poudre est dégazée 4h à 200°C.

**EXEMPLE 1**

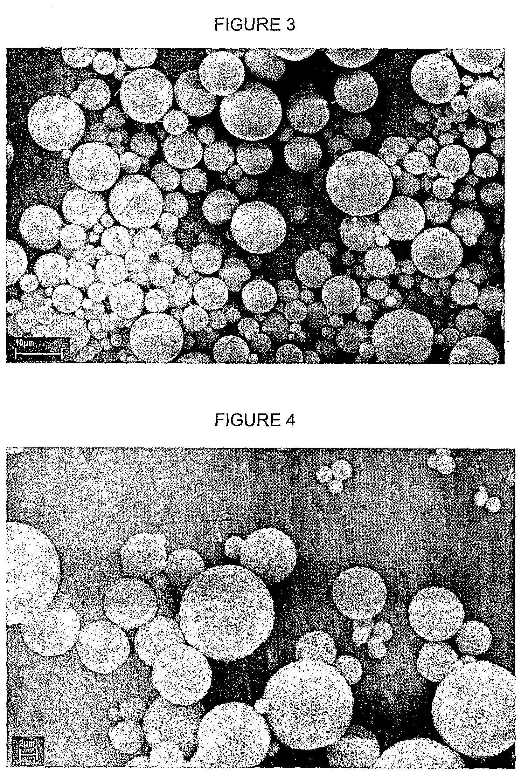

Cet exemple concerne la synthèse d'un précurseur d'aluminate de baryum de formule $Ba_{0,9}Eu_{0,1}MgAl_{10}O_{17}$. Les matières premières utilisées sont un sol de boehmite (surface spécifique de 265 $m^2$/g) à 0,157mol Al pour 100g de gel, un nitrate de baryum à 99,5 %, un nitrate de magnésium à 99 % et une solution de nitrate d'europium à 2,102 mol/l en Eu (d = 1,5621 g/ml). On fabrique 200 mL de sol de boehmite (soit 0,3 mole d'Al). Par ailleurs, la solution de sel (150 mL) contient 7,0565 g de $Ba(NO_3)_2$; 7,9260 g de $Mg(NO_3)_2$ et 2,2294 g de la solution de $Eu(NO_3)_3$. Le volume final est complété à 405 mL (soit 2% en Al). Le pH final après mélange du sol et de la solution de sels est de 3,5. Le mélange obtenu est atomisé dans un atomiseur de type APV® avec une température de 145°C en sortie. La poudre séchée est calcinée à 900°C pendant 2 heures sous air. La poudre ainsi obtenue est blanche. Elle répond à la composition chimique $Ba_{0,9}Eu_{0,1}MgAl_{10}O_{17}$. Les particules sont sphériques, ont un $d_{50}$ de 10,4$\mu$m et un indice de dispersion de 0,6 (mesures Laser Coulter). Le produit a une structure d'alumine gamma (DRX). Le produit émet dans le rouge, l'émetteur étant $Eu^{3+}$. Le diagramme RX correspond à celui de la figure 1. La photo de la figure 3 montre bien l'aspect sphérique des particules constituant le produit. Il présente une teneur en azote de 0,39% (mesurée sur un appareil LECO TC 436), une teneur en soufre inférieure à 0,01% et une teneur en carbone de 0,09%(ces deux teneurs étant mesurées sur un appareil LECO CS 444). Les porogrammes obtenus par les mesures de porosimétrie font apparaître un diamètre moyen des pores de 10 nm.

Après calcination de la poudre à 1200°C, 2 heures sous argon, on obtient de nouveau un produit sous forme d'une poudre blanche. Cette poudre est constituée de particules sphériques, de $d_{50}$ de 9,7$\mu$m et d'indice de dispersion est de 0,5 (mesures Laser Coulter). Le produit a une structure d'alumine bêta (DRX). Le diagramme RX correspond à celui de la figure 2. La photo de la figure 4 montre bien l'aspect sphérique des particules constituant le produit. Le produit émet dans le bleu, l'émetteur étant $Eu^{2+}$ (émission à 450nm). Le rendement lumineux est au moins égal à celui des produits obtenus par réaction solide-solide (chamottage) et il est supérieur d'au moins 20% voire 30% à celui des produits obtenus par pyrolyse d'aérosol.

## EXEMPLE 2

Cet exemple concerne la préparation de différents produits. Cette préparation est faite selon le mode opératoire de l'exemple 1, notamment à partir du même sol de boehmite. Les différents éléments rentrant dans la composition des produits (terres rares, alcalino-terreux) sont apportés sous forme de nitrates dans les quantités nécessaires pour obtenir la stoechiométrie de la composition recherchée. Comme dans l'exemple 1, les solutions de sels et le sol sont mélangés et ce mélange est complété avec le volume d'eau nécessaire pour obtenir une dissolution complète des sels. Le mélange est séché par atomisation avec un atomiseur BUCHI avec une température de 120°C en sortie. La poudre séchée est calcinée à 900°C pendant 2 heures sous air. Les précurseurs sont ensuite calcinés à différentes températures pour obtenir le luminophore correspondant.

On donne dans le tableau qui suit les compositions préparées, les caractéristiques granulométriques des précurseurs, la température de calcination des précurseurs pour obtenir les luminophores correspondants et la couleur d'émission des luminophores à la longueur d'onde indiquée.

| Composition | Granulométrie | | Température de calcination °C | Couleur d'émission (longueur d'onde nm) |
|---|---|---|---|---|
| | $d_{50}$ | $\sigma$/m | | |
| $Ce_{0,67}Tb_{0,33}Al_{11}O_{19}$ | 4,69 | 0,53 | 1400 | Vert (254) |
| $Sr_{0,98}Eu_{0,01}Dy_{0,01}Al_2O_4$ | 4,49 | 0,71 | 1300 | Vert (Visible) |
| $Sr_{3,92}Eu_{0,04}Dy_{0,04}Al_{14}O_{25}$ | 9,66 | 0,52 | 1300 | Bleu turquoise (Visible) |

Le produit $Ce_{0,67}Tb_{0,33}Al_{11}O_{19}$ est luminescent, les deux autres sont phosphorescents.

## Revendications

1.  Composé précurseur d'aluminate d'alcalino-terreux ou de terre rare de formule (1) ou (2)

$$a(M^1O).b(MgO).c(Al_2O_3) \qquad (1)$$

$$a(M^2O_{1,5}).b(MgO).c(Al_2O_3) \qquad (2)$$

dans lesquelles $M^1$ désigne le baryum, le strontium ou le calcium et $M^2$ désigne le cérium et le terbium en combinaison et a, b et c sont des nombres entiers ou non vérifiant les relations :

$$0{,}25 \le a \le 4;\ 0 \le b \le 2\ et\ 0{,}5 \le c \le 9;$$

cristallisé sous la forme essentiellement d'une alumine de transition,
conduisant après calcination à un aluminate d'alcalino-terreux ou de terre rare,
**caractérisé en ce qu'**il se présente sous la forme de particules substantiellement sphériques et chimiquement homogènes dans lesquelles les éléments constitutifs sont liés entre eux par des liaisons de type chimique, présentant un diamètre moyen compris entre 1,5 $\mu$m et 20 $\mu$m et comportant des pores dont le diamètre moyen est compris entre 10 nm et 200 nm, la porosité étant mesurée par les techniques connues à l'azote et au mercure.

2. Composé selon la revendication 1, **caractérisé en ce qu'**il présente une teneur en azote d'au plus 1%.

3. Composé selon la revendication 1 ou 2, **caractérisé en ce que** les particules comportent des pores dont le diamètre moyen est compris entre 10 nm et 100 nm.

4. Composé selon l'une des revendications précédentes, **caractérisé en ce qu'**il répond à la formule (1) dans laquelle a = 1, b = 0 et c = 1, 6 ou 7.

5. Composé selon la revendication 1 ou 2, **caractérisé en ce qu'**il répond à la formule $a(Ba_{1-d}Eu_d).b(MgO).c(Al_2O_3)$ (3) dans laquelle a, b et c sont comme définis plus haut et vérifient les relations :

$$0,25 \leq a \leq 2; \ 0 \leq b \leq 2 \text{ et } 3 \leq c \leq 9 \text{ et } 0,01 \leq d \leq 0,3.$$

6. Composé selon la revendication 1, 2 ou 3, **caractérisé en ce qu'**il répond à la formule (1) dans laquelle a = b = 1 et c = 5 ou 7, $M^1$ pouvant désigner plus particulièrement le baryum.

7. Composé selon la revendication 1, 2 ou 3, **caractérisé en ce qu'**il répond à la formule (1) dans laquelle a = 1, b = 2 et c = 8, $M^1$ pouvant désigner plus particulièrement le baryum.

8. Composé selon la revendication 1, 2 ou 3, **caractérisé en ce qu'**il répond à la formule (2) dans laquelle a = b = 1 et c = 5,5.

9. Composé selon l'une des revendications précédentes, **caractérisé en ce que** $M^1$ est partiellement substitué par au moins une terre rare qui peut être plus particulièrement l'europium, le néodyme et le dysprosium.

10. Composé selon l'une des revendications précédentes, **caractérisé en ce que** le magnésium est partiellement substitué par au moins un élément choisi parmi le zinc ou le manganèse.

11. Composé selon l'une des revendications précédentes, **caractérisé en ce que** l'aluminium est partiellement substitué par au moins un élément choisi parmi le gallium, scandium, le bore, le germanium ou le silicium.

12. Composé selon l'une des revendications précédentes, **caractérisé en ce que** les particules présentent un indice de dispersion d'au plus 0,8.

13. Composé selon l'une des revendications précédentes, **caractérisé en ce qu'**il présente une teneur en azote d'au plus 0,6%.

14. Composé selon l'une des revendications précédentes, **caractérisé en ce qu'**il présente une teneur en carbone d'au plus 0,5%, plus particulièrement d'au plus 0,2%.

15. Composé selon l'une des revendications précédentes, **caractérisé en ce qu'**il présente une teneur en chlore d'au plus 10%, plus particulièrement d'au plus 5%.

16. Composé selon l'une des revendications précédentes, **caractérisé en ce qu'**il présente une teneur en soufre d'au plus 0,05%, plus particulièrement d'au plus 0,01%.

17. Composé selon l'une des revendications précédentes, **caractérisé en ce qu'**il répond à la formule (1) où l'alcalino-terreux est le baryum et dans laquelle a = b = 1 et c = 5 ou 7 ou dans laquelle a = 1, b = 2 et c = 8 ou à la formule (3) et **en ce qu'**il présente par calcination dès 1200°C une structure d'alumine bêta pure.

**18.** Composé selon l'une des revendications précédentes, **caractérisé en ce que** les particules présentent un domaine d'hétérogénéïté dont la taille est inférieure à 60 nm$^2$.

**19.** Procédé de préparation d'un composé précurseur selon l'une des revendications 1 à 18, **caractérisé en ce qu'**il comporte les étapes suivantes :

- on forme un mélange liquide comportant des composés de l'aluminium et des autres éléments rentrant dans la composition du précurseur ;
- on sèche par atomisation ledit mélange, l'atomisation étant opérée avec une température de sortie du solide comprise entre 100°C et 300°C ;
- on calcine le produit séché à une température comprise entre 700°C et 950°C.

**20.** Procédé selon la revendication 19, **caractérisé en ce qu'**on utilise comme composé de l'aluminium un sol de cet élément.

**21.** Procédé selon la revendication 19 ou 20, **caractérisé en ce qu'**on utilise des nitrates comme composés de l'aluminium et des éléments précités.

## Patentansprüche

**1.** Erdalkali- oder Seltenerdmetallaluminat-Vorläuferverbindung der Formel (1) oder (2):

$$a(M^1O).b(MgO).c(Al_2O_3) \qquad (1)$$

$$a(M^2O_{1,5}).b(MgO).c(Al_2O_3) \qquad (2)$$

in denen M$^1$ für Barium, Strontium oder Calcium steht und M$^2$ für Cer und Terbium in Kombination steht und a, b und c ganze oder gebrochene Zahlen sind, die folgende Beziehungen erfüllen:

$$0{,}25 \leq a \leq 4;\ 0 \leq b \leq 2 \text{ und } 0{,}5 \leq c \leq 9;$$

die im Wesentlichen in Form eines Aluminiumoxids kristallisiert ist und
nach Calcinierung zu einem Erdalkali- oder Seltenerdmetallaluminat führt,
**dadurch gekennzeichnet, dass** sie in Form von weitgehend kugelförmigen und chemisch homogenen Teilchen, in denen die Aufbauelemente durch Bindungen vom chemischen Typ miteinander verbunden sind, mit einem mittleren Durchmesser zwischen 1,5 $\mu$m und 20 $\mu$m und mit Poren, deren mittlerer Durchmesser zwischen 10 nm und 200 nm liegt, vorliegt, wobei die Porosität mit den bekannten Stickstoff- und Quecksilber-Techniken gemessen wird.

**2.** Verbindung nach Anspruch 1, **dadurch gekennzeichnet, dass** sie einen Stickstoffgehalt von höchstens 1 % aufweist.

**3.** Verbindung nach Anspruch 1 oder 2, **dadurch gekennzeichnet, dass** die Teilchen Poren enthalten, deren mittlerer Durchmesser zwischen 10 nm und 100 nm liegt.

**4.** Verbindung nach einem der vorhergehenden Ansprüche, **dadurch gekennzeichnet, dass** sie der Formel (1) entspricht, in der a = 1, b = 0 und c = 1, 6 oder 7.

**5.** Verbindung nach Anspruch 1 oder 2, **dadurch gekennzeichnet, dass** sie der Formel $a(Ba_{1-d}Eu_d).b(MgO).c(Al_2O_3)$ (3) entspricht, in der a, b und c wie oben definiert sind und die folgenden Beziehungen erfüllen:

$$0{,}25 \leq a \leq 2;\ 0 \leq b \leq 2 \text{ und } 3 \leq c \leq 9 \text{ und } 0{,}01 \leq d \leq 0{,}3.$$

**6.** Verbindung nach Anspruch 1, 2 oder 3, **dadurch gekennzeichnet, dass** sie der Formel (1) entspricht, in der a = b = 1 und c = 5 oder 7, wobei M$^1$ spezieller für Barium steht.

**7.** Verbindung nach Anspruch 1, 2 oder 3, **dadurch gekennzeichnet, dass** sie der Formel (1) entspricht, in der a = 1, b = 2 und c = 8, wobei M$^1$ spezieller für Barium steht.

**8.** Verbindung nach Anspruch 1, 2 oder 3, **dadurch gekennzeichnet, dass** sie der Formel (2) entspricht, in der a = b = 1 und c = 5,5.

**9.** Verbindung nach einem der vorhergehenden Ansprüche, **dadurch gekennzeichnet, dass** M$^1$ teilweise durch mindestens ein Seltenerdmetall, bei dem es sich spezieller um Europium, Neodym und Dysprosium handeln kann, ersetzt ist.

**10.** Verbindung nach einem der vorhergehenden Ansprüche, **dadurch gekennzeichnet, dass** das Magnesium teilweise durch mindestens ein Element, das aus Zink oder Mangan ausgewählt ist, ersetzt ist.

**11.** Verbindung nach einem der vorhergehenden Ansprüche, **dadurch gekennzeichnet, dass** das Aluminium teilweise durch mindestens ein Element, das aus Gallium, Scandium, Bor, Germanium oder Silicium ausgewählt ist, ersetzt ist.

**12.** Verbindung nach einem der vorhergehenden Ansprüche, **dadurch gekennzeichnet, dass** die Teilchen einen Dispersionsindex von höchstens 0,8 aufweisen.

**13.** Verbindung nach einem der vorhergehenden Ansprüche, **dadurch gekennzeichnet, dass** sie einen Stickstoffgehalt von höchstens 0,6 % aufweist.

**14.** Verbindung nach einem der vorhergehenden Ansprüche, **dadurch gekennzeichnet, dass** sie einen Kohlenstoffgehalt von höchstens 0,5 %, spezieller höchstens 0,2 %, aufweist.

**15.** Verbindung nach einem der vorhergehenden Ansprüche, **dadurch gekennzeichnet, dass** sie einen Chlorgehalt von höchstens 10 %, spezieller höchstens 5 %, aufweist.

**16.** Verbindung nach einem der vorhergehenden Ansprüche, **dadurch gekennzeichnet, dass** sie einen Schwefelgehalt von höchstens 0,05 %, spezieller höchstens 0,01 %, aufweist.

**17.** Verbindung nach einem der vorhergehenden Ansprüche, **dadurch gekennzeichnet, dass** sie der Formel (1), wobei es sich bei dem Erdalkalimetall um Barium handelt und in der a = b = 1 und c = 5 oder 7 oder in der a = 1, b = 2 und c = 8, oder der Formel (3) entspricht und dass sie durch Calcinierung bei über 1200 °C eine reine beta-Aluminiumoxid-Struktur aufweist.

**18.** Verbindung nach einem der vorhergehenden Ansprüche, **dadurch gekennzeichnet, dass** die Teilchen eine Heterogenitätsdomäne aufweist, deren Größe kleiner als 60 nm$^2$ ist.

**19.** Verfahren zur Herstellung einer Vorläuferverbindung nach einem der Ansprüche 1 bis 18, **dadurch gekennzeichnet, dass** sie die folgenden Schritte umfasst:

- es wird eine flüssige Mischung gebildet, die Aluminiumverbindungen und andere Elemente, die in der Vorläuferzusammensetzung enthalten sind, enthält;
- die Mischung wird sprühgetrocknet, wobei das Sprühen mit einer Feststoff-Ausgangstemperatur zwischen 100 °C und 300 °C durchgeführt wird.

**20.** Verfahren nach Anspruch 19, **dadurch gekennzeichnet, dass** man als Aluminiumverbindung ein Sol dieses Elements verwendet.

**21.** Verfahren nach Anspruch 19 oder 20, **dadurch gekennzeichnet, dass** man als Verbindungen von Aluminium und den oben genannten Elementen Nitrate verwendet.

**Claims**

**1.** Alkaline-earth metal or rare-earth metal aluminate precursor compound of formula (1) or (2)

11

$$a(M^1O).b(MgO).c(Al_2O_3) \qquad (1)$$

$$a(M^2O_{1.5}).b(MgO).c(Al_2O_3) \qquad (2)$$

in which $M^1$ denotes barium, strontium or calcium and $M^2$ denotes cerium and terbium in combination and a, b and c are integer or non-integer numbers which satisfy the relationships

$$0.25 \le a \le 4;\ 0 \le b \le 2 \text{ and } 0.5 \le c \le 9;$$

crystallized essentially in the form of a transition alumina,
leading after calcination to an alkaline-earth metal or rare-earth metal aluminate,
**characterized in that** it is in the form of substantially spherical and chemically homogeneous particles in which the constituent elements are bonded together via bonds of chemical type, having a mean diameter of between 1.5 $\mu$m and 20 $\mu$m and comprising pores whose mean diameter is between 10 nm and 200 nm, the porosity being measured via the known techniques with nitrogen and with mercury.

2. Compound according to Claim 1, **characterized in that** it has a nitrogen content of not more than 1%.

3. Compound according to Claim 1 or 2, **characterized in that** the particles comprise pores whose mean diameter is between 10 nm and 100 nm.

4. Compound according to one of the preceding claims, **characterized in that** it corresponds to formula (1) in which a = 1, b = 0 and c = 1, 6 or 7.

5. Compound according to Claim 1 or 2, **characterized in that** it corresponds to the formula $a(Ba_{1-d}Eu_d).b(MgO).c(Al_2O_3)$ (3) in which a, b and c are as defined above and satisfy the relationships

$$0.25 \le a \le 2;\ 0 \le b \le 2 \text{ and } 3 \le c \le 9 \text{ and } 0.01 \le d \le 0.3.$$

6. Compound according to Claim 1, 2 or 3, **characterized in that** it corresponds to formula (1) in which a = b = 1 and c = 5 or 7, M1 possibly denoting more particularly barium.

7. Compound according to Claim 1, 2 or 3, **characterized in that** it corresponds to formula (1) in which a = 1, b = 2 and c = 8, $M^1$ possibly denoting more particularly barium.

8. Compound according to Claim 1, 2 or 3, **characterized in that** it corresponds to formula (2) in which a = b = 1 and c = 5.5.

9. Compound according to one of the preceding claims, **characterized in that** $M^1$ is partially substituted with at least one rare-earth metal which may more particularly be europium, neodymium or dysprosium.

10. Compound according to one of the preceding claims, **characterized in that** the magnesium is partially substituted with at least one element chosen from zinc and manganese.

11. Compound according to one of the preceding claims, **characterized in that** the aluminium is partially substituted with at least one element chosen from gallium, scandium, boron, germanium and silicon.

12. Compound according to one of the preceding claims, **characterized in that** the particles have a dispersion index of not more than 0.8.

13. Compound according to one of the preceding claims, **characterized in that** it has a nitrogen content of not more than 0.6%.

14. Compound according to one of the preceding claims, **characterized in that** it has a carbon content of not more than 0.5%, more particularly not more than 0.2%.

15. Compound according to one of the preceding claims, **characterized in that** it has a chlorine content of not more than 10%, more particularly not more than 5%.

16. Compound according to one of the preceding claims, **characterized in that** it has a sulfur content of not more than 0.05%, more particularly not more than 0.01%.

17. Compound according to one of the preceding claims, **characterized in that** it corresponds to formula (1) in which the alkaline-earth metal is barium and in which a = b = 1 and c = 5 or 7 or in which a = 1, b = 2 and c = 8 or to formula (3) and **in that** it has, by calcination from 1200°C, a pure beta alumina structure.

18. Compound according to one of the preceding claims, **characterized in that** the particles have a heterogeneity range whose size is less than 60 nm$^2$.

19. Process for preparing a precursor compound according to one of Claims 1 to 18, **characterized in that** it comprises the following steps:

- a liquid mixture is formed comprising compounds of aluminium and of the other elements included in the composition of the precursor;
- said mixture is dried by atomization, the atomization being performed with a solid outlet temperature of between 100°C and 300°C;
- the dried product is calcined at a temperature of between 700°C and 950°C.

20. Process according to Claim 19, **characterized in that** the aluminium compound used is a sol of this element.

21. Process according to Claim 19 or 20, **characterized in that** nitrates are used as compounds of aluminium and of the abovementioned elements.

FIGURE 1

FIGURE 2

FIGURE 3

FIGURE 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 02094716 A
- US 20010042853 A
- US 6482387 B

- FR 2257326
- FR 2419754
- FR 2431321

**Littérature non-brevet citée dans la description**

- *J. Am. Ceram. Soc.,* 1999, vol. 82 (8), 2056-2060
- *Mat. Res. Bull.,* 2000, vol. 35, 789-798

- **BRUNAUER ; EMMETT ; TELLER.** *The Journal of the American Chemical Society,* 1938, vol. 60, 309
- **MASTERS.** SPRAY-DRYING. 1976